# EUROPEAN PATENT SPECIFICATION

(11) **EP 3 542 111 B1**
(45) Date of publication and mention of the grant of the patent: **22.07.2026**
(21) Application number: 17889683.3
(22) Date of filing: 26.12.2017
(51) Int. Cl.: F25D 23/06, F25D 23/02, F16B 11/00, B32B 15/14

(54) **REFRIGERATOR**
KÜHLSCHRANK
RÉFRIGÉRATEUR

(30) Priority: 03.01.2017 KR 20170000951
(43) Date of publication of application: 25.09.2019
(73) Proprietor: Samsung Electronics Co., Ltd., Suwon-si, Gyeonggi-do 16677 (KR)
(72) Inventor: JUNG, Moon Gyo, Suwon-si Gyeonggi-do 16582 (KR); KANG, Byeong Kook, Gwangju 62234 (KR); RYU, Sang Chul, Gwangju 62222 (KR); OH, Jong-hoon, Gwangju 62307 (KR); NA, Kyung Won, Suwon-si Gyeonggi-do 16676 (KR)
(74) Representative: Gulde & Partner
(86) International application number: PCT/KR2017/015429
(87) International publication number: WO 2018/128311

(56) References cited:
- DE-A1- 102011 006 238
- JP-A- 2015 200 458
- KR-A- 20070 104 506
- KR-A- 20120 039 905
- KR-A- 20120 039 905
- KR-A- 20160 115 445
- US-A1- 2013 257 256
- US-A1- 2016 282 035

## Description

### [Technical Field]

Embodiments of the present disclosure relate to a refrigerator, and more particularly, to a refrigerator having an assembly type inner case.

### [Background Art]

A refrigerator is apparatus including a main body having a storage compartment and a cold air supply system configured to supply cold air to the storage compartment to keep food fresh. The storage compartment includes a refrigerator compartment in which a temperature of about 0 °C to 5 °C is maintained to keep food refrigerated and a freezer compartment in which a temperature of about 0 °C to -30 °C is maintained to keep food frozen.

The main body of the refrigerator is provided by an inner case and an outer case being coupled. The inner case forms the storage compartment, and the outer case forms an exterior of the refrigerator. An insulating material for insulating is interposed between the inner case and the outer case. The storage compartment of the refrigerator is formed such that a front surface of the storage compartment is open, and the open front surface is closed by doors to maintain a temperature of the storage compartment.

Generally, the inner case of the refrigerator is formed through a vacuum forming method in which a sheet formed of a resin material is heated, the extended sheet is put on a mold, air is suctioned from a side opposite a side onto which the extended sheet is put, the heated sheet covers the mold or is drawn into the mold due to a suction force generated when the air is suctioned, and thus the inner case is formed.

A material usable for the inner case formed through the vacuum forming method is limited to a resin material. Even when a method in which an inner case is formed through the vacuum forming method and a metal sheet is attached to an inside of the inner case is used, since it is necessary for the metal sheet to be attachable to the inside of the inner case, a material for the inner case is limited by a type, a thickness, a weight, and the like of a material bonded thereto.

DE 10 2011 006238 A1 is directed to a refrigerator having a modular body, according to the preamble of claim 1.

US 2016/282035 A1 discloses a refrigerator including an outer case and an inner case, wherein the inner case is of an assembly type.

### [Disclosure]

### [Technical Problem]

To address the above-discussed deficiencies, it is a primary object to provide a refrigerator including an inner case in which a material used to implement the inner case is not limited, and which is formed of various materials and has various shapes.

It is another aspect of the present disclosure to provide a refrigerator including an inner case configured to allow a sheet forming one side of the inner case to be replaced without an additional mold being manufactured when the inner case of the refrigerator formed of various materials is formed.

Additional aspects of the disclosure will be set forth in part in the description which follows and, in part, will be obvious from the description, or may be learned by practice of the disclosure.

### [Technical Solution]

The invention is defined by the appended set of claims. The description that follows is subjected to this limitation. Any disclosure lying outside the scope of said claims is only intended for illustrative as well as comparative purposes.

In accordance with one aspect of the present disclosure, a refrigerator including an inner case configured to form a storage compartment, an outer case coupled to an outer side of the inner case and configured to form an exterior, and an insulating material interposed between the inner case and the outer case. The inner case includes an upper sheet, a lower sheet, a left sheet, a right sheet, a rear sheet, and a front cover. Each of the left sheet and the right sheet is provided to be replaceable with a sheet having a different thickness.

Each of the left sheet and the right sheet includes one sheet of a first sheet having a first thickness and a second sheet having a second thickness greater than the first thickness, and the first sheet includes an edge bent to correspond to the second thickness.

At least one among the upper sheet, the lower sheet, the rear sheet, and the front cover includes side sheet insertion grooves formed at left and right edges thereof to allow the left sheet and the right sheet to be inserted into the side sheet insertion grooves.

Among a first member and a second member, which are adjacent to each other, among the upper sheet, the lower sheet, the rear sheet, and the front cover, the first member may include a flange configured to extend toward the second member. The second member may include a flange insertion groove formed at an edge of the second member located at a side of the first member and configured to allow the flange of the first member to be inserted into the flange insertion groove.

The first member may include a hook configured to protrude from one surface of the flange, and formed to be spaced a predetermined distance form an end portion of the flange. The second member may include a slot formed in the flange insertion groove and configured to accommodate the hook.

Among a first member and a second member, which are adjacent to each other, among the upper sheet, the lower sheet, the rear sheet, and the front cover, the first member may include a protrusion formed at an end portion of a side sheet insertion groove of the first member located at a side of the second member and configured to extend toward the second member. The second member may include a protrusion insertion groove formed at an end portion of a side sheet insertion groove of the second member located at a side of the first member and configured to allow the protrusion of the first member to be inserted into the protrusion insertion groove.

The protrusion of the first member and the protrusion insertion groove of the second member may be coupled by a coupling member.

The left sheet and the right sheet may include escape portions formed at corners therein such that the coupling member does not pass through the left sheet and the right sheet.

The rear sheet may include a first rear sheet and a second rear sheet disposed vertically. The first rear sheet may include a flange formed at a edge of first rear sheet located at a side of the second rear sheet, and the second rear sheet may include a flange insertion groove formed at a edge of second rear sheet located at a side of the first rear sheet to allow the flange of the first rear sheet to be inserted into the flange insertion groove.

The first rear sheet may include an uneven portion formed at one surface of the flange to prevent leakage of the insulating material.

The rear sheet may include a support member attached to a rear surface of the rear sheet and configured to connect the first rear sheet and the second rear sheet.

The rear sheet may include a shelf installation member attached to a front surface of the rear sheet and fixed to the support member to allow a shelf to be installed in the storage compartment.

The rear sheet may include a resin material, the first sheet may include a metal material, and the second sheet may include a ceramic material.

The second sheet may include a body layer having a ceramic material, a coated layer formed on the body layer located at a side of the storage compartment, and a reinforcing layer formed on the body layer located at a side of the outer case.

The reinforcing layer may include at least one layer of a first reinforcing layer having a metal material and a second reinforcing layer having a fiber material.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Definitions for certain words and phrases are provided throughout this patent document, those of ordinary skill in the art should understand that in many, if not most instances, such definitions apply to prior, as well as future uses of such defined words and phrases.

### [Advantageous Effects]

As is apparent from the above description, since a refrigerator can include an inner case formed by several sheets being assembled, a refrigerator including an inner case having various materials can be formed by forming sheets having various materials.

Since an inner case is formed to allow a sheet located at one side of the inner case to be replaceable, the sheet can be replaced with another sheet having a different material or thickness from that of the sheet without an additional mold being manufactured, and thus a refrigerator including the inner case having various materials and designs can be provided.

### [Description of Drawings]

For a more complete understanding of the present disclosure and its advantages, reference is now made to the following description taken in conjunction with the accompanying drawings, in which like reference numerals represent like parts:
FIG. 1 is a view illustrating a front surface of a refrigerator according to one embodiment of the present disclosure and a state in which all first doors and second doors are opened;
FIG. 2 is a view illustrating a state in which one second door of the second doors of the refrigerator of FIG. 1 is opened;
FIG. 3 is a view illustrating inner cases of the refrigerator according to one embodiment of the present disclosure;
FIG. 4 is an exploded view illustrating the inner cases of the refrigerator illustrated in FIG. 3;
FIG. 5 is an enlarged view illustrating a coupling portion of an upper sheet, a right sheet, and a rear sheet of the inner case of the refrigerator illustrated in FIG. 3;
FIG. 6 is an exploded view illustrating the coupling portion of the upper sheet, the right sheet, and the rear sheet of the inner case of the refrigerator illustrated in FIG. 5;
FIG. 7 is an exploded view illustrating a coupling portion of the upper sheet of the inner case of the refrigerator illustrated in FIG. 5, a right sheet having a different thickness from the right sheet illustrated in FIG. 6, and a rear sheet;
FIG. 8 is a cross-sectional view illustrating the coupling portion of the upper sheet and the rear sheet of the inner case of the refrigerator illustrated in FIG. 5;
FIG. 9 is an exploded view illustrating the rear sheet of the refrigerator illustrated in FIG. 3;
FIG. 10 is a cross-sectional view illustrating a coupling portion of a first rear sheet and a second rear sheet of the rear sheet illustrated in FIG. 9;
FIG. 11 is a cross-sectional view illustrating a sheet forming a side sheet of the inner case of the refrigerator according to one embodiment of the present disclosure;
FIG. 12 is a cross-sectional view illustrating a sheet forming a side sheet of an inner case of a refrigerator according to another embodiment of the present disclosure;
FIG. 13 is a cross-sectional view illustrating a sheet forming a side sheet of an inner case of a refrigerator according to still another embodiment of the present disclosure;
FIG. 14 is a view illustrating a storage container installation member separated from the side sheet of the refrigerator according to one embodiment of the present disclosure;
FIG. 15 is a perspective view illustrating the storage container installation member illustrated in FIG. 14;
FIG. 16 is a cross-sectional view illustrating a state in which the storage container installation member illustrated in FIG. 14 is attached to the side sheet of the inner case;
FIG. 17 is a cross-sectional view illustrating a state in which the storage container installation member illustrated in FIG. 14 is attached to a side sheet having a different thickness from the side sheet of the inner case illustrated in FIG. 16; and
FIG. 18 is a view illustrating a state in which a storage container installation member according to another embodiment of the present disclosure is attached to a side sheet having a different thickness from the side sheets of the inner case illustrated in FIG. 16 and FIG. 17.

### [Mode for Invention]

Embodiments described in this specification and configurations illustrated in the accompanying drawings are only exemplary embodiments of the disclosed disclosure. The disclosure covers various modifications that may be substituted for the embodiments and drawings herein

In addition, the same reference numerals or symbols in the drawings of this specification refer to parts or components that substantially perform the same function.

In addition, terms used in the present specification are merely used to describe the exemplary embodiments and are not intended to limit and/or restrict the embodiments. An expression used in the singular encompasses the expression of the plural unless the expression has a clearly different meaning in context. In the present specification, terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or be added.

In addition, it should be understood that, although the terms "first," "second," and the like may be used herein to describe various elements, the elements are not limited by these terms. The terms are only used to distinguish one element from another. For example, a first element could be termed a second element, and, similarly, a second element could be termed a first element without departing from the scope of the present disclosure. As used herein, the term "and/or" includes any and all combinations of one or more of the associated listed items. Meanwhile, the terms such as "front end," "back end," "upper portion," "lower portion," "upper end," and "lower end" used in the specification are defined on the basis of the drawings, and shapes and positions of components are not limited by the terms.

Hereinafter, embodiments according to the present disclosure will be described in detail with reference to the accompanying drawings.

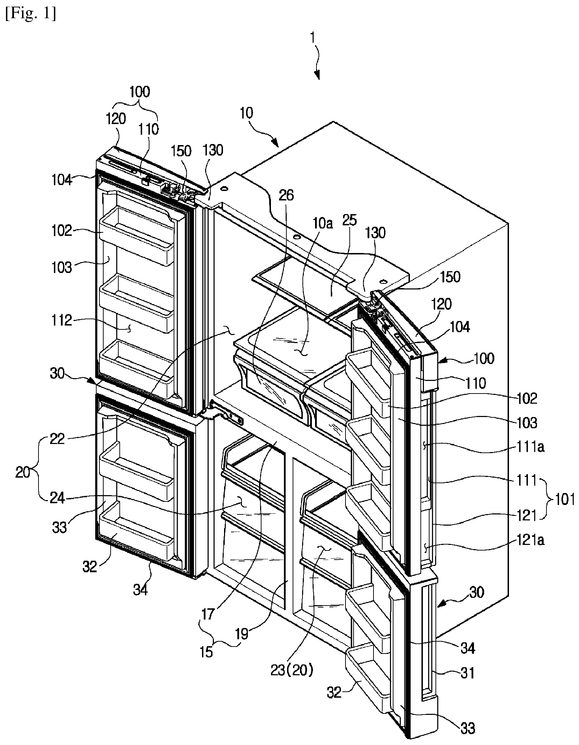

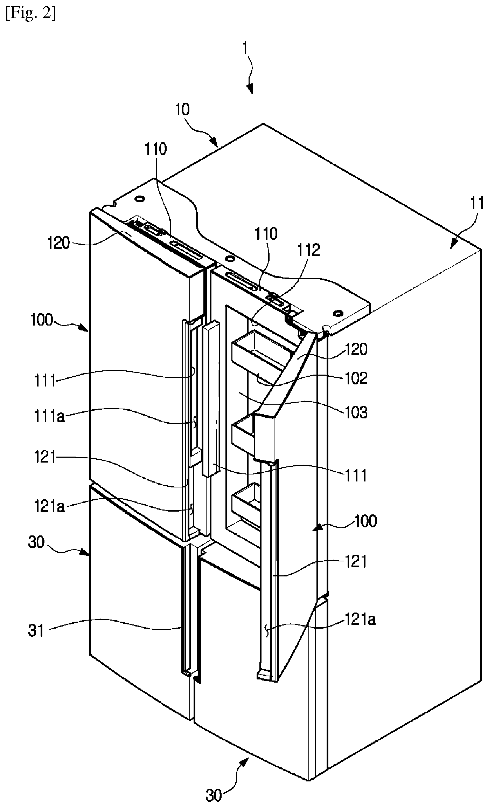

FIG. 1 is a view illustrating a front surface of a refrigerator according to one embodiment of the present disclosure and a state in which all first doors and second doors are open, and FIG. 2 is a view illustrating a state in which one second door of the second doors of the refrigerator of FIG. 1 is opened;

A refrigerator 1 includes a main body 10, storage compartments 20 divided into upper and lower sections in the main body 10, doors configured to open and close the storage compartments 20, and a cold air supply apparatus (not shown) configured to supply cold air to the storage compartments 20.

The main body 10 may include inner cases forming the storage compartments 20, an outer case 11 coupled to outer sides of the inner cases to form an exterior of the refrigerator 1, and an insulating material foamed in a space between the inner cases and the outer case 11 and insulate the storage compartment 20.

The cold air supply apparatus may generate cold air using a cooling cycle in which a refrigerant is compressed, condensed, expanded, and evaporated.

The plurality of storage compartments 20 may be divided by partitions 15, and a plurality of shelves 25 and a plurality of storage containers 26 may be provided in the storage compartments 20 to store food and the like.

The storage compartments 20 may be divided into a plurality of storage compartments 22, 23, and 24 by the partitions 15, and the partitions 15 include a first partition 17 horizontally coupled to an inside of the storage compartment 20 to divide the storage compartments 20 into an upper storage compartment 22 and lower storage compartments 23 and 24, and a second partition 19 vertically coupled in the lower storage compartments 23 and 24 to divide the lower storage compartments 23 and 24 into a first storage compartment 23 and a second storage compartment 24.

The partitions 15 having a "T" shape due to the first partition 17 and the second partition 19 being coupled may divide the storage compartments 20 into three spaces. Among the upper storage compartment 22 and the lower storage compartments 23 and 24, the upper storage compartment 22 divided by the first partition 17 may be used as a refrigerator compartment, and the lower storage compartments 23 and 24 may be used as freezer compartments.

Although the entirety of the lower storage compartments 23 and 24 may be used as the freezer compartment, the first storage compartment 23 may be used as a freezer compartment and the second storage compartment 24 may be used as a refrigerator compartment, or the first storage compartment 23 may be used as a freezer compartment and the second storage compartment 24 may be used as a freezer or refrigerator compartment.

The above described division of the storage compartments 20 is one example, and the storage compartments 22, 23, and 24 may be used differently from the above-described configuration.

The refrigerator compartment 22 may be opened and closed by a pair of door units 100 rotatably coupled to the main body 10. The pair of door units 100 may be opened and closed by a pair of refrigerator compartment door unit handles 101 including first door handles 111 and second door handles 121.

The freezer compartment 24 may be opened and closed by a pair of freezer compartment door units 30 rotatably coupled to the main body 10. The pair of freezer compartment door units 30 may be opened and closed by a pair of freezer compartment door unit handles 31. A sliding door may also be applied as a door configured to open and close the freezer compartment 24.

The pair of door units 100 and the pair of freezer compartment door units 30 may open and close a main body opening 10a of the open main body 10. Door shelves 102 and 32 capable of accommodating food may be provided on rear surfaces of the pair of door units 100 and the pair of freezer compartment door units 30.

The door shelves 102 and 32 may include shelf supports 103 and 33 formed at both right and left sides of the door shelves 102 and 32 and configured to vertically extend from the door units 100 and 30 to support the door shelves 102 and 32. The shelf supports 103 and 33 may be additionally provided to be detachable from the door units 100 and 30, and in the embodiment, the shelf supports 103 and 33 are provided to extend from the door units 100 and 30.

In addition, first gaskets 104 and 34 may be provided at edges of the rear surfaces of the door units 100 and 30 to seal gaps between the door units 100 and 30 and the main body 10 in a state in which the door units 100 and 30 are closed. The first gaskets 104 and 34 may be installed in a loop shape along the edges of the rear surfaces of the door units 100 and 30 and include magnets (not shown).

The pair of door units 100 configured to open and close the refrigerator compartment 22 may be disposed at a right side and a left side of the refrigerator compartment 22. Hereinafter, the door unit 100 disposed at the left side will be described for the sake of convenience in the description, and the door unit 100 disposed at the left side will be referred to as the door unit 100. However, the door unit 100 which will be described below is not limited to the door unit 100 disposed at the left side, may be applied to the door unit 100 disposed at the right side, and may also be applied to at least one of the pair of freezer compartment door units 30.

The door unit 100 may include a double door having a first door 110 and a second door 120.

The first door 110 may be rotatably connected to the main body 10 by a first hinge unit 130 and configured to open and close the main body opening 10a of the main body 10. The door shelves 102, the shelf supports 103, and the first gasket 104 described above may be provided at the first door 110.

The first door 110 may include a first door handle 111 formed to be gripped by a user when the user opens and closes the first door 110. The first door handle 111 may be provided at one end portion of the first door 110 opposite the other end portion of the first door 110 connected to the first hinge unit 130. The first door handle 111 is formed to be inserted into a second handle space 121a formed by the second door handle 121. The first door handle 111 may form a first handle space 111a, and the user may grip the first door handle 111 via the first handle space 111a and open and close the first door 110. When the door unit 100 is opened using the first door handle 111, the first door 110 is opened and the second door 120, which will be described below, is also opened.

The first door 110 includes a first door opening 112 formed to allow the user to approach the door shelf 102 and put food in or take food out of the refrigerator when the first door 110 is closed. Such a first door opening 112 may be formed to pass through the first door 110 and be opened and closed by the second door 120.

The second door 120 may be provided in front of the first door 110 to open and close the first door opening 112 of the first door 110, and may be provided to rotate in the same direction in which the first door 110 rotates. In the embodiment of FIG. 1, the second door 120 is illustrated to be rotatably supported by a second hinge unit 150 installed at the first door 110 and be rotatable about the first door 110, but is not limited thereto, and the second hinge unit 150 may also be installed at the main body 10 such that the second door 120 may be provided to be rotatable about the main body 10.

The second door 120 may include the second door handle 121 formed to be gripped by the user when the user opens and closes the second door 120. The second door handle 121 may be provided at one end portion of the second door 120 opposite the other end portion of the second door 120 connected to the second hinge unit 150. The second door handle 121 may be formed to be larger than the first door handle 111 to allow the first door handle 111 to be inserted into the second door handle 121. The second door handle 121 may form a second handle space 121a, and the user may grip the second door handle 121 via the second handle space 121a and open and close the second door 120. When the door unit 100 is opened using the second door handle 121, the first door 110 may not be opened and only the second door 120 may be opened.

The second door 120 may include a second gasket (not shown) for maintaining a seal between the second door 120 and the first door 110. The second gasket (not shown) may be installed in a loop shape along an edge of the rear surface of the second door 120 and include magnet (not shown).

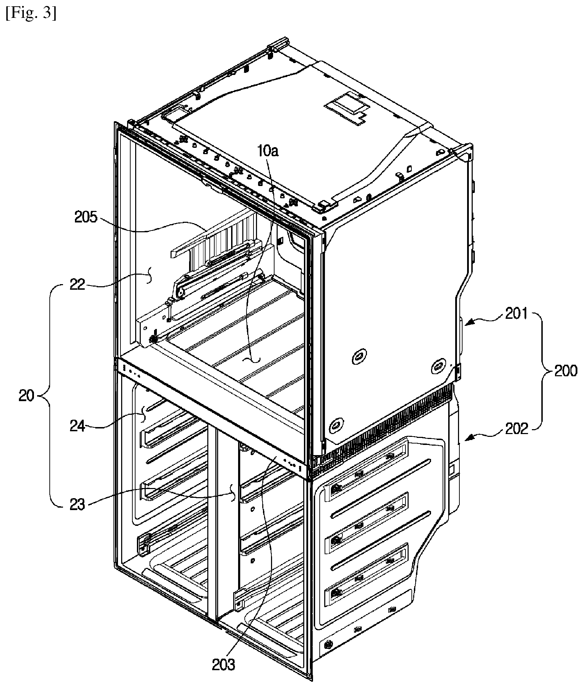

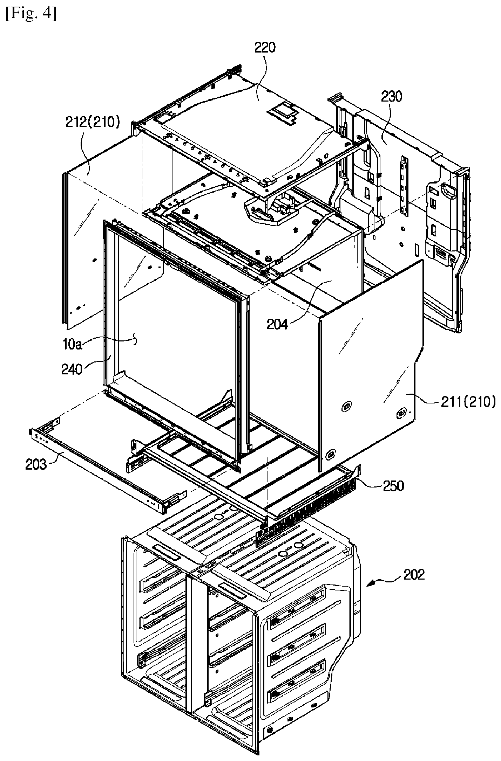

FIG. 3 is a view illustrating inner cases of the refrigerator according to one embodiment of the present disclosure, and FIG. 4 is an exploded view illustrating the inner cases of the refrigerator illustrated in FIG. 3;

Referring to FIGS. 3 and 4, inner cases 200 forming the storage compartment 20 may include a first inner case 201 forming the upper storage compartment 22, and second inner cases 202 forming the lower storage compartments 23 and 24. In addition, the inner cases 200 may be formed by assembling sheets forming surfaces of the storage compartments 20, and using a vacuum forming method, which is a conventional method of forming an inner case.

In the embodiment illustrated in FIGS. 3 and 4, the first inner case 201 includes an assembly type inner case and the second inner case 202 includes an inner case formed by a vacuum forming method, but the first inner case 201 may also include an inner case formed by the vacuum forming method and the second inner case 202 may also include an assembly type inner case, or both the first inner case 201 and the second inner case 202 may include assembly type inner cases. Hereinafter, the inner case 200 is defined as an inner case including an assembly type inner case like the first inner case 201.

The inner case 200 may include an upper sheet 220, a lower sheet 250, a left sheet 212, a right sheet 211, a rear sheet 230, and a front cover 240 forming the storage compartment 20. The front cover 240 may include the main body opening 10a, and a front surface reinforcing material 203, to which the door unit 100 and the like may be fixed, may be attached to a front surface of the front cover 240.

An interior material 204 configured to cover at least a part of the upper sheet 220, the lower sheet 250, the left sheet 212, the right sheet 211, and the rear sheet 230 of the inner case 200 may be disposed inside the storage compartment 20. A cold air duct configured to cool the storage compartment 20 may be formed between the interior material 204 and the inner case. The interior material 204 may be formed of various materials such as a metal material and a resin material. In addition, rails 205 provided such that the shelf 25 or the storage container 26 may be installed thereon may be attached to the left sheet 212 and the right sheet 211 of the inner case 200.

The inner case 200 may be formed by individually forming and assembling the upper sheet 220, the lower sheet 250, the left sheet 212, the right sheet 211, the rear sheet 230, and the front cover 240. Specifically, at least two members among the upper sheet 220, the lower sheet 250, the left sheet 212, the right sheet 211, the rear sheet 230, and the front cover 240 may be assembled by an engagement method.

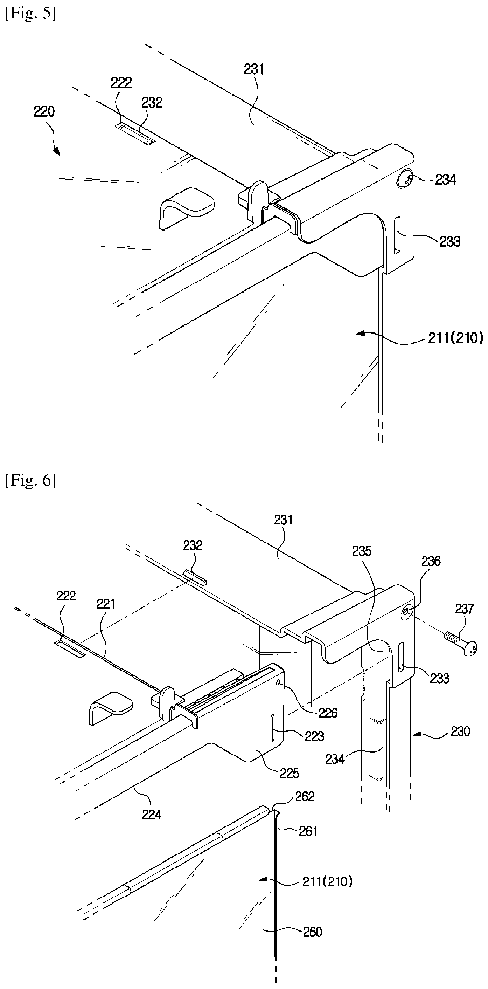

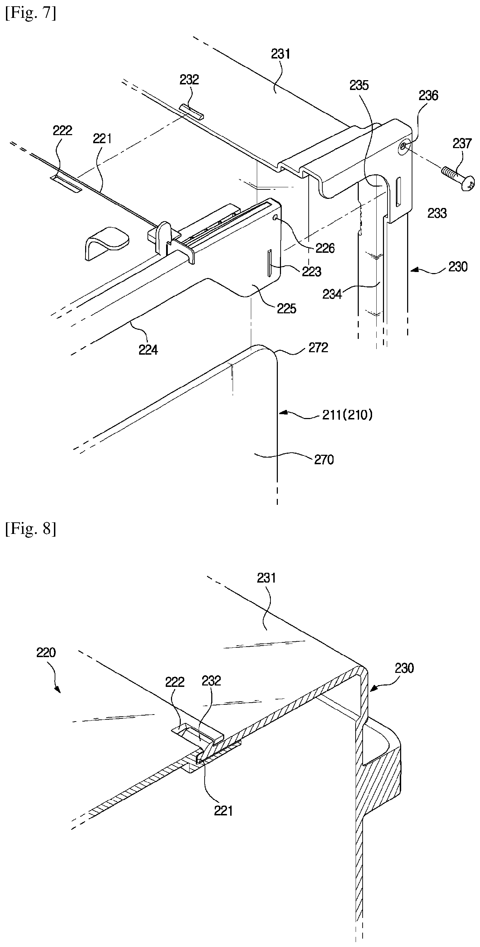

FIG. 5 is an enlarged view illustrating a coupling portion of the upper sheet, the right sheet, and the rear sheet of the inner case of the refrigerator illustrated in FIG. 3, FIG. 6 is an exploded view illustrating the coupling portion of the upper sheet, the right sheet, and the rear sheet of the inner case of the refrigerator illustrated in FIG. 5, FIG. 7 is an exploded view illustrating a coupling portion of the upper sheet of the inner case of the refrigerator illustrated in FIG. 5, a right sheet having a different thickness from the right sheet illustrated in FIG. 6, and a rear sheet, and FIG. 8 is a cross-sectional view illustrating the coupling portion of the upper sheet and the rear sheet of the inner case of the refrigerator illustrated in FIG. 5;

Referring to FIGS. 5 to 8, the inner case 200 may be formed to allow the left sheet 212 and the right sheet 211 to be replaceable with different sheets having different thicknesses. Specifically, each of the left sheet 212 and the right sheet 211 of the inner case 200 may include any one sheet among a first sheet and a second sheet having different thicknesses.

Referring to FIG. 6, the right sheet 211 may include a first sheet 260 having a first thickness, and referring to FIG. 7, the right sheet 211 may also include a second sheet 270 having a second thickness greater than the first thickness. Although not illustrated in the drawings, the left sheet 212 may also include the first sheet 260 or the second sheet 270. Hereinafter, each of the right sheet 211 and the left sheet 212 will be commonly referred to and described as a side sheet 210.

At least one sheet among the upper sheet 220, the lower sheet 250, the rear sheet 230, and the front cover 240 may include sheet insertion grooves 224 or 234 into which the side sheet 210 is inserted. The side sheet insertion grooves 224 or 234 may be formed at right and left edges of the at least one sheet among the upper sheet 220, the lower sheet 250, the rear sheet 230, and the front cover 240. The side sheet insertion grooves 224 or 234 may have a width corresponding to the second thickness to allow the first sheet 260 having the first thickness and the second sheet 270 having the second thickness to be inserted into the side sheet insertion grooves 224 or 234.

The first sheet 260 having the first thickness may include edges 261 bent to be engaged with and coupled to the side sheet insertion grooves 224 or 234 having a width corresponding to the second thickness. That is, the edge 261 of the first sheet 260 may be bent to have the second thickness. The edges 261 of the first sheet 260 may be bent two times to be in close contact with three surfaces of the side sheet insertion grooves 224 or 234. Since the edges 261 of the first sheet 260 are engaged and in close contact with the three surfaces of the side sheet insertion grooves 224 or 234, leakage of an insulating material foamed in a space between the inner case 200 and the outer case 11 may be prevented.

Two adjacent members among the upper sheet 220, the lower sheet 250, the rear sheet 230, and the front cover 240 except for the side sheets 210 may also be coupled by an engagement coupling method and fixed by a coupling member 237. Specifically, among a first member and a second member, which are adjacent to each other, among the upper sheet 220, the lower sheet 250, the rear sheet 230, and the front cover 240, the first member may include a first flange 231 configured to extend toward the second member, and the second member may include a first flange insertion groove 221 formed at an edge of the second member located at a side of the first member and configured to allow the first flange 231 of the first member to be inserted into the first flange insertion groove 221.

Referring to FIGS. 5 to 8, the first member may be the rear sheet 230, and the second member may be the upper sheet 220. That is, the rear sheet 230 may include the first flange 231 configured to extend toward the upper sheet, and the upper sheet 220 may include the first flange insertion groove 221 formed at a rear end edge and configured to allow the first flange 231 of the rear sheet 230 to be inserted into the first flange insertion groove 221.

The first member may include a first hook 232 configured to protrude from one surface of the first flange 231 and formed to be spaced a predetermined distance from an end portion of the first flange. In addition, the first member may include a first slot 222 formed in the first flange insertion groove 221 and configured to accommodate the first hook 232 of the rear sheet 230.

Specifically, the first hook 232 may be formed on an upper surface of the first flange 231 of the rear sheet 230, and the first slot 222 may be formed on an upper surface of the first flange insertion groove 221 of the upper sheet 220 in contact with the upper surface of the first flange 231 and at a position corresponding to the first hook 232. Referring to FIG. 8, since the first hook 232 is formed to be spaced the predetermined distance from the end portion of the first flange 231, the first slot 222 is also formed to be spaced the predetermined distance from an innermost side of the upper surface of the first flange insertion groove 221. Through such a shape, leakage of the insulating material filled in the space between the inner case 200 and the outer case 11 through the first slot 222 may be effectively prevented.

Meanwhile, among the adjacent first and second members among the upper sheet 220, the lower sheet 250, the rear sheet 230, and the front cover 240, the first member may include a protrusion 225 formed at an end portion of the side sheet insertion groove 224 of the first member located at a side of the second member and configured to extend toward the second member. The second member may include a protrusion insertion groove 235 formed at an end portion of the side sheet insertion groove 234 of the second member located at a side of the first member and configured to allow the protrusion 225 of the first member to be inserted into the protrusion insertion groove 235.

Referring to FIGS. 5 to 8, the first member may be the upper sheet 220, and the second member may be the rear sheet 230. That is, the upper sheet 220 may include the protrusion 225 configured to extend from an end portion of the side sheet insertion groove 224 of the upper sheet 220 located at a side of the rear sheet 230 toward the rear sheet 230, and the rear sheet 230 may include the protrusion insertion groove 235 formed at an end portion of the side sheet insertion groove 234 of the rear sheet 230 located at the side of the upper sheet 220 and configured to allow the protrusion 225 of the upper sheet 220 to be inserted into the protrusion insertion groove 235.

Since the protrusion 225 of the upper sheet 220 is formed by the side sheet insertion groove 224 being extended, the side sheet 210 is even inserted into the protrusion 225. Accordingly, the protrusion insertion groove 235 formed at an upper end of the side sheet insertion groove 234 of the rear sheet 230 is formed to have a width greater than that of the side sheet insertion groove 234. Specifically, the protrusion insertion groove 235 may have the width corresponding to a sum of the second thickness and a thickness of a sheet forming the upper sheet 220.

A second hook 223 spaced a predetermined distance from an end portion of the protrusion 225 may be formed on one surface of the protrusion 225. In addition, a second slot 233 in which the second hook 223 may be accommodated may be provided on one surface of the protrusion insertion groove 235.

The protrusion 225 and the protrusion insertion groove 235 respectively formed on the adjacent first member and the second member among the upper sheet 220, the lower sheet 250, the rear sheet 230, and the front cover 240 may be fixed by the coupling member 237. Specifically, the protrusion 225 of the first member and the protrusion insertion groove 235 of the second member may respectively include coupling holes 226 and 236, and the protrusion 225 and the protrusion insertion groove 235 may be coupled by a force being applied to the coupling member 237 such as a screw from the outside toward the inside of the first member.

Although not illustrated in the drawings, the rear sheet 230 and the lower sheet 250 may also be coupled through a method similar to the coupling method of the rear sheet 230 and the upper sheet 220 and fixed by a coupling member. In addition, the front cover 240 and the upper sheet, and the front cover 240 and the rear sheet 230 may also be coupled through methods similar to the coupling method of the rear sheet 230 and the upper sheet 220 and fixed by coupling members. As four front corners and four rear corners of the inner case 200 are fixed by coupling members 237, the assembly type inner case 200 may not be inclined in one direction.

The side sheet 210 may include escape portions 262 or 272 such that the coupling members 237 do not pass through the side sheet 210 or do pass around the side sheet 210. The escape portions 262 of the side sheet 210 including the first sheet 260 illustrated in FIG. 6 may be formed at corners of the side sheet 210 while the edges of side sheet 210 are bent. In addition, it is preferable for the side sheet 210 including the second sheet illustrated in FIG. 7 to include the corner rounded with a radius of 2 mm to prevent corner damage. The rounded corner may serve as the escape portions 272 through which the coupling members 237 do not pass through the side sheet 210 or do pass around the side sheet 210.

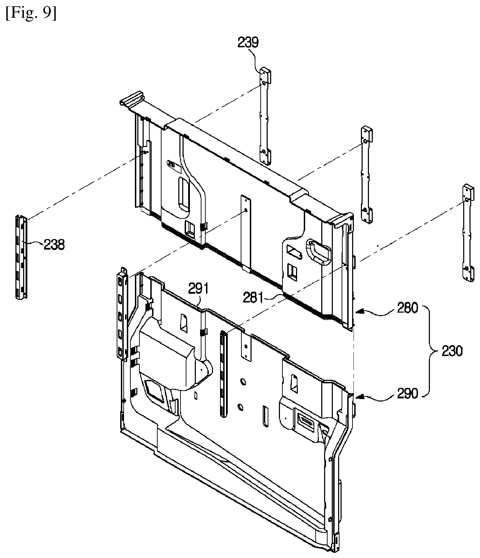

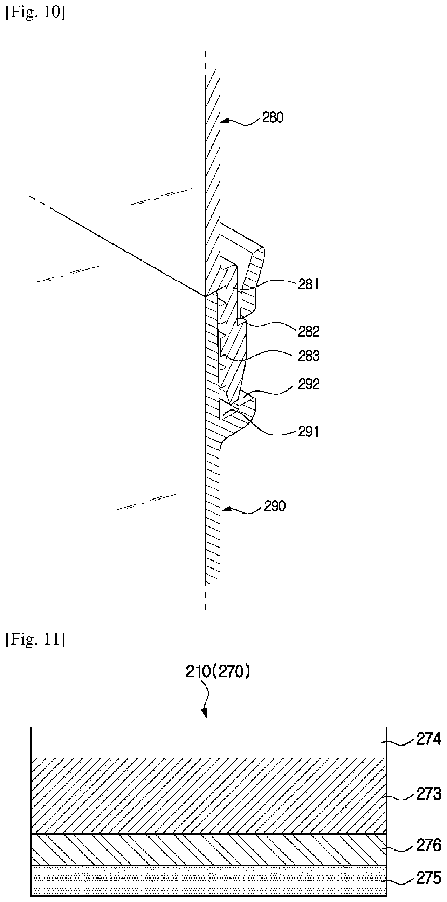

FIG. 9 is an exploded view illustrating the rear sheet of the refrigerator illustrated in FIG. 3, and FIG. 10 is a cross-sectional view illustrating a coupling portion of a first rear sheet and a second rear sheet of the rear sheet illustrated in FIG. 9;

Referring to FIGS. 9 and 10, the rear sheet 230 of the inner case 200 of the refrigerator 1 may include a first rear sheet 280 and a second rear sheet 290 disposed vertically. Generally, since the rear sheet 230 of the inner case 200 has a complex shape to perform various functions, the rear sheet 230 is formed of a resin material by injection molding. As a size of refrigerator 1 increases, a size of the rear sheet 230 of the inner case 200 also increases. Accordingly, when a big rear sheet 230 is formed by coupling a plurality of members, production efficiency can be increased.

The first rear sheet 280 may include a second flange 281 formed at a edge of the first rear sheet 280 located at a side of the second rear sheet 290 to assemble the first rear sheet 280 and the second rear sheet 290, and the second rear sheet 290 may include a second flange insertion groove 291 formed at a edge of the second rear sheet 290 located at a side of the first rear sheet 280 to allow the second flange 281 of the first rear sheet 280 to be inserted into the second flange insertion groove 291.

Specifically, since the first rear sheet 280 may be disposed at an upper side of the second rear sheet 290, the first rear sheet 280 may include the second flange 281 provided at a lower end edge of the first rear sheet 280, and the second rear sheet 290 may include the second flange insertion groove 291 provided at an upper end edge of the second rear sheet 290.

Referring to FIG. 10, the first rear sheet 280 may include an uneven portion 283 formed on one surface of the second flange 281 to prevent leakage of the insulating material configured to be foamed in the space between the inner case 200 and the outer case 11. In addition, the first rear sheet 280 may include a third hook 282 formed to protrude from the other surface of the second flange 281. The uneven portion 283 of the second flange 281 may include a plurality of uneven portion to more securely prevent leakage of the insulating material. A third slot 292 in which the third hook 282 may be accommodated may be provided on one surface of the second flange insertion groove 291.

Referring to FIG. 9, the rear sheet 230 of the inner case 200 may include a support member 239 attached to a rear surface of the rear sheet 230 and configured to connect the first rear sheet 280 and the second rear sheet 290 to secure strength and firmly couple the first rear sheet 280 and the second rear sheet 290. In addition, the rear sheet 230 may include a shelf installation member 238 attached to a front surface of the rear sheet 230 and fixed to the support member 239 to allow the shelf 25 and the like to be installed in the storage compartment 20.

The support member 239 and the shelf installation member 238 may be formed of a metal material. Since the support member 239 and the shelf installation member 238 pass through the rear sheet 230 to be coupled, strength of the rear sheet 230 can be increased, and the first rear sheet 280 and the second rear sheet 290 can be firmly coupled. In addition, the rear sheet 230 may firmly support the shelf 25 using the support member 239 when the shelf 25 is installed at the shelf installation member 238 even in the storage compartment 20.

In the inner case 200 of the refrigerator 1 according to the present disclosure, since the upper sheet 220, the lower sheet 250, the left sheet 212, the right sheet 211, the rear sheet 230, and the front cover 240 may be assembled and formed, materials of the members may be easily changed. Particularly, the side sheet 210 may include the first sheet 260 or the second sheet 270 having different thicknesses, and may also include the first sheet 260 or the second sheet 270 having different materials.

In the refrigerator according to the present disclosure, since a material of the inner case 200 may be widely selected, the refrigerator 1 which satisfies a consumer's sensibility and preference can be provided, and a value due to visual quality thereof can be increased. For example, the first sheet 260 having the first thickness illustrated in FIG. 6 may include a metal material. In addition, the second sheet 270 having the second thickness illustrated in FIG. 7 may include a ceramic material.

Since the first sheet 260 formed of the metal material has a thermal conductivity higher than that of the first sheet 260 formed of a resin material, an inner surface of the storage compartment 20 may be cooled within a shorter period time such that the storage compartment 20 may have a uniform temperature distribution. Since the second sheet 270 formed of a ceramic material may prevent the smell of food stored in the storage compartment 20 from permeating the inner case 200, cleanness in the storage compartment 20 may be improved.

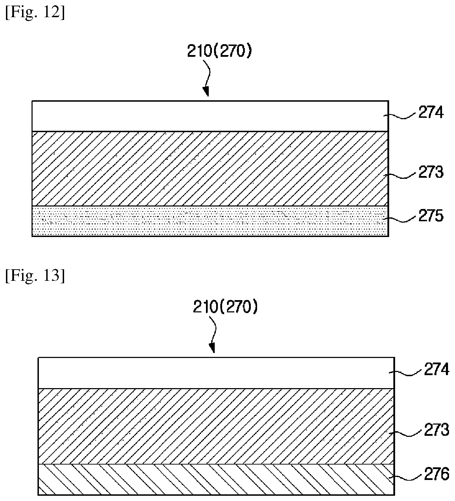

FIG. 11 is a cross-sectional view illustrating a sheet forming the side sheet of the inner case of the refrigerator according to one embodiment of the present disclosure, FIG. 12 is a cross-sectional view illustrating a sheet forming a side sheet of an inner case of a refrigerator according to another embodiment of the present disclosure, and FIG. 13 is a cross-sectional view illustrating a sheet forming a side sheet of an inner case of a refrigerator according to still another embodiment of the present disclosure;

Referring to FIGS. 11 to 13, the second sheet 270 of the side sheet 210 may include a body layer 273 including a ceramic material, a coated layer 274 formed on the body layer 273 located at a side of the storage compartment 20, and a reinforcing layer formed on the body layer 273 located at a side of the outer case 11.

Specifically, the reinforcing layer may include at least one layer of a first reinforcing layer 275 including a metal material and a second reinforcing layer including a fiber material. When the second sheet 270 includes both the first reinforcing layer 275 and the second reinforcing layer 276, it is preferable for the first reinforcing layer 275 including the metal material to be disposed at the outermost side of the second sheet 270.

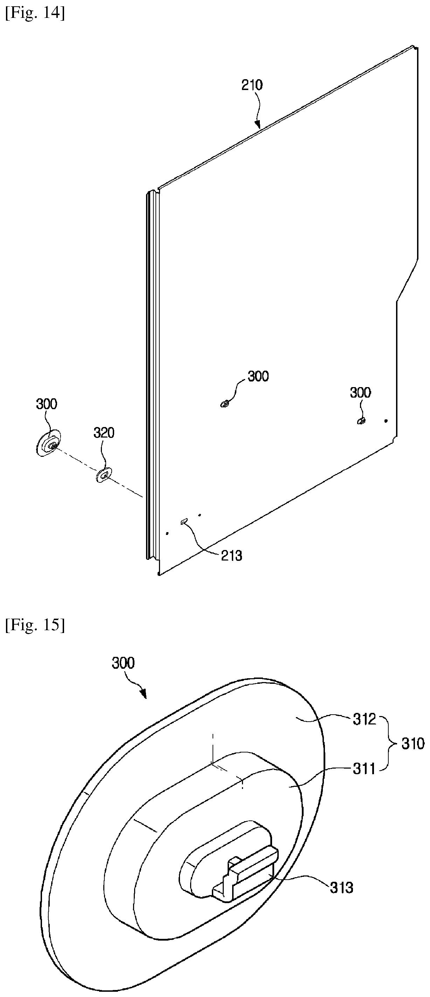

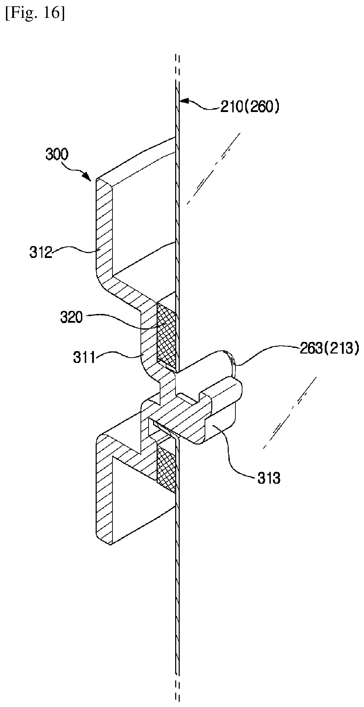

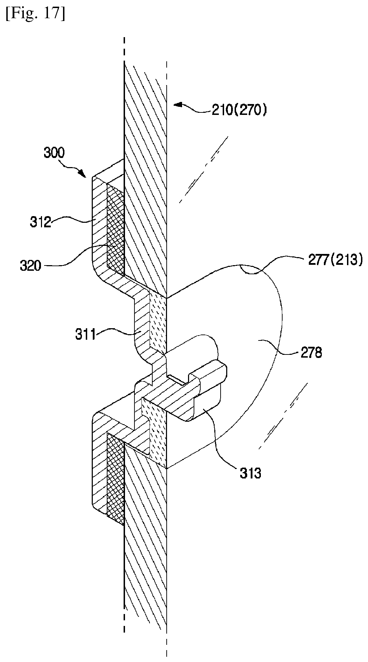

FIG. 14 is a view illustrating a storage container installation member separated from the side sheet of the refrigerator according to one embodiment of the present disclosure, FIG. 15 is a perspective view illustrating the storage container installation member illustrated in FIG. 14, FIG. 16 is a cross-sectional view illustrating a state in which the storage container installation member illustrated in FIG. 14 is attached to the side sheet of the inner case, and FIG. 17 is a cross-sectional view illustrating a state in which the storage container installation member illustrated in FIG. 14 is attached to a side sheet having a different thickness from the side sheet of the inner case illustrated in FIG. 16.

Referring to FIGS. 3 and 14 to 17, the refrigerator 1 may include storage container installation members 300 to allow the storage container 26 to be installed in the storage compartment 20, and an installation member installation hole 213, in which the storage container installation members 300 may be installed, may be provided in the left sheet 212 and the right sheet 211 of the inner case 200 forming the storage compartment 20.

Specifically, the storage container installation member 300 may include a rail hook 313 on which the rail 205 and the like, through which the storage container 26 may be installed, may be installed, and a side sheet support 310 supported by the side sheet 210. The rail hook 313 may be disposed to pass through the installation member installation hole 213 formed in the side sheet 210 to protrude into the storage compartment 20, and the side sheet support 310 may be supported by an outer surface of the side sheet 210.

The storage container installation member 300 may be attached to the side sheet 210 using an adhesive 320 such as an adhesive tape. That is, the adhesive 320 may be interposed between the side sheet support 310 of the storage container installation member 300 and the side sheet 210.

The storage container installation member 300 may include a plurality of side sheet supports to be supported by two or more sheets having different thicknesses. Specifically, the storage container installation member 300 may include a first support 311 supported by the first sheet 260 having the first thickness and a second support 312 supported by the second sheet 270 having the second thickness greater than the first thickness. The first support 311 may be formed to protrude from the second support 312 to a height corresponding to the second thickness.

Referring to FIG. 16, the first sheet 260 having the first thickness, which is a relatively thin thickness, may support the first support 311 of the storage container installation member 300. The first installation member installation hole 263 of the first sheet 260 may be formed to allow only the rail hook 313 of the storage container installation member 300 to pass through the first installation member installation hole 263, and to allow the first support 311 configured to extend from an outer circumferential surface of the rail hook 313 to be supported by a periphery of the first installation member installation hole 263.

Referring to FIG. 17, the second sheet 270 having the second thickness greater than the first thickness may support the second support 312 of the storage container installation member 300. The second installation member installation hole 277 of the second sheet 270 may be formed to allow the rail hook 313 and the first support 311 of the storage container installation member 300 to pass through the second installation member installation hole 277, and to allow the second support 312 configured to extend from an outer circumferential surface of the first support 311 to be supported by a periphery of the second installation member installation hole 277.

When holes such as the second installation member installation hole 277 are formed in the second sheet 270 including the ceramic material, it is preferable for a gap between the holes to be 30 mm or more. In addition, it is preferable for the holes to be spaced 30 mm or more from an edge of the second sheet 270.

Since the second installation member installation hole 277 is wider than the first installation member installation hole 263 by an area of the first support 311, a finishing material 278 for filling a groove formed by an inner surface of the second sheet 270 and the first support 311 of the storage container installation member 300 may be disposed in the second installation member installation hole 277 of the second sheet 270.

Since the storage container installation member 300 includes the first support 311 supported by the first sheet 260 having the first thickness and the second support 312 supported by the second sheet 270 having the second thickness greater than the first thickness, the storage container installation member 300 can be commonly used even when the side sheets 210 of the inner case 200 use sheets having different thicknesses.

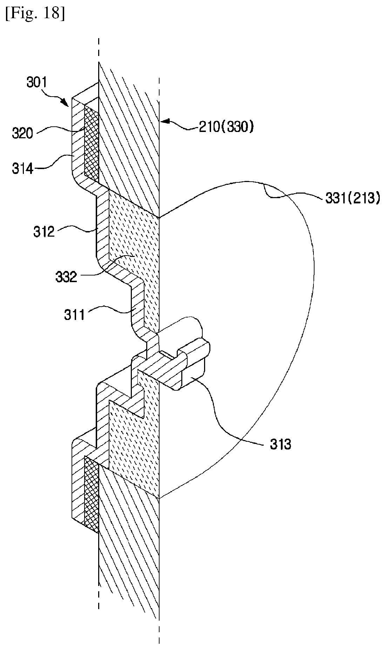

FIG. 18 is a view illustrating a state in which a storage container installation member according to another embodiment of the present disclosure is attached to a side sheet having a different thickness from the side sheets of the inner case illustrated in FIG. 16 and FIG. 17.

Referring to FIG. 18, a storage container installation member 301 may include a first support 311, a second support 312, and a third support 314 to be supportable by three or more sheets having different thicknesses. Specifically, the storage container installation member 301 may include the third support 314 recessed from the second support 312 by a difference between a third thickness of a third sheet illustrated in FIG. 18 and a second thickness of a second sheet 270 illustrated in FIG. 17. That is, the second support 312 may be formed to protrude from the third support 314 to a height corresponding to the difference between the third thickness and the second thickness.

A third installation member installation hole 331 formed in a third sheet 330 may be formed to allow a rail hook 313, the first support 311, and the second support 312 of a storage container installation member 301 to pass through the third installation member installation hole 331, and to allow the third support 314 configured to extend from an outer surface of the second support 312 to be supported by a periphery of third installation member installation hole 331.

Since the third installation member installation hole 331 is wider than a second installation member installation hole 277 by an area of the second support 312, a finishing material 332 for filling a groove formed by an inner surface of the third sheet 330 and the first and second supports 311 and 312 of the storage container installation member 301 may be formed in the third installation member installation hole 331 of the third sheet 330. The finishing material 332 may be formed to correspond to shapes of the first support 311 and the second support 312 of the storage container installation member 301.

Although not illustrated in the drawing, at least adjacent two sheets among an upper sheet 220, a lower sheet 250, and a rear sheet 230 forming an inner case 200 may be integrally formed. That is, the upper sheet 220 and the rear sheet 230 may be integrally formed, the lower sheet 250 and the rear sheet 230 may be integrally formed, or all of the upper sheet 220, the rear sheet 230, and the lower sheet 250 may be integrally formed. The at least two integrally formed sheets may include side sheet insertion grooves configured to allow side sheets to be inserted into the side sheet insertion grooves.

Although the present disclosure has been described with an exemplary embodiment, various changes and modifications may be suggested to one skilled in the art. It is intended that the present disclosure encompass such changes and modifications as fall within the scope of the appended claims.

## Claims

1. A refrigerator (1) comprising:
an inner case (200) configured to form a storage compartment (20);
an outer case (11) coupled to an outer side of the inner case (200) and configured to form an exterior; and
an insulating material interposed between the inner case (200) and the outer case (11),
wherein the inner case (200) includes an upper sheet (220), a lower sheet (250), a left sheet (212), a right sheet (211), a rear sheet (230), and a front cover (240); and
**characterized in that**
each of the left sheet (212) and the right sheet (211) is provided to be replaceable with a sheet having a different thickness;
each of the left sheet (212) and the right sheet (211) includes one sheet of a first sheet (260) having a first thickness and a second sheet (270) having a second thickness greater than the first thickness; and
the first sheet (260) includes an edge (261) bent to correspond to the second thickness,
wherein at least one among the upper sheet (220), the lower sheet (250), the rear sheet (230), and the front cover (240) includes side sheet insertion grooves (224, 234) formed at left and right edges thereof to allow the left sheet (212) and the right sheet (211) to be inserted into the side sheet insertion grooves (224, 234).

2. The refrigerator of claim 1, wherein:
among a first member and a second member, which are adjacent to each other, among the upper sheet (220), the lower sheet (250), the rear sheet (230), and the front cover (240), the first member includes a flange (231) configured to extend toward the second member; and
the second member includes a flange insertion groove (221) formed at an edge of the second member located at a side of the first member and configured to allow the flange (231) of the first member to be inserted into the flange insertion groove (221).

3. The refrigerator of claim 2, wherein:
the first member includes a hook (232) configured to protrude from one surface of the flange (231) and formed to be spaced a predetermined distance from an end portion of the flange (231); and
the second member includes a slot (222) formed in the flange insertion groove (221) and configured to accommodate the hook (232).

4. The refrigerator of claim 1, wherein:
among a first member and a second member, which are adjacent to each other, among the upper sheet (220), the lower sheet (250), the rear sheet (230), and the front cover (240), the first member includes a protrusion (225) formed at an end portion of a side sheet insertion groove (224) of the first member located at a side of the second member and configured to extend toward the second member; and
the second member includes a protrusion insertion groove (235) formed at an end portion of a side sheet insertion groove (234) of the second member located at a side of the first member and
configured to allow the protrusion (225) of the first member to be inserted into the protrusion insertion groove (235).

5. The refrigerator of claim 4, wherein the protrusion (225) of the first member and the protrusion insertion groove (235) of the second member are coupled by a coupling member (237).

6. The refrigerator of claim 5, wherein the left sheet (212) and the right sheet (211) include escape portions (262, 272) formed at corners thereof such that the coupling member (237) does not pass through the left sheet (212) and the right sheet (211).

7. The refrigerator of claim 1, wherein:
the rear sheet (230) includes a first rear sheet (280) and a second rear sheet (290) disposed vertically;
the first rear sheet (280) includes a flange (281) formed at a edge of the first rear sheet (280) located at a side of the second rear sheet (290); and
the second rear sheet (290) includes a flange insertion groove (291) formed at an edge of second rear sheet (290) located at a side of the first rear sheet (280) to allow the flange (281) of the first rear sheet (280) to be inserted into the flange insertion groove (291).

8. The refrigerator of claim 7, wherein the first rear sheet (280) includes an uneven portion (283) formed at one surface of the flange (281) to prevent leakage of the insulating material.

9. The refrigerator of claim 7, wherein the rear sheet (230) includes a support member (239) attached to a rear surface of the rear sheet (230) and configured to connect the first rear sheet (280) and the second rear sheet (290).

10. The refrigerator of claim 9, wherein the rear sheet (230) includes a shelf installation member (238) attached to a front surface of the rear sheet (230) and fixed to the support member (239) to allow a shelf (25) to be installed in the storage compartment (20).

11. The refrigerator of claim 1, wherein:
the rear sheet (230) includes a resin material;
the first sheet (260) includes a metal material; and
the second sheet (270) includes a ceramic material.

12. The refrigerator of claim 11, wherein the second sheet (270) includes a body layer (273) having a ceramic material, a coated layer (274) formed on the body layer (273) located at a side of the storage compartment (20), and a reinforcing layer (275, 276) formed on the body layer (273) located at a side of the outer case (11).

13. The refrigerator of claim 12, wherein the reinforcing layer includes at least one layer of a first reinforcing layer having (275) a metal material and a second reinforcing layer (276) having a fiber material.

## Patentansprüche

1. Kühlschrank (1), umfassend:
ein Innengehäuse (200), das zum Ausbilden eines Lagerfachs (20) konfiguriert ist;
ein Außengehäuse (11), das mit einer Außenseite des Innengehäuses (200) gekoppelt und konfiguriert ist, um ein Äußeres auszubilden; und
ein Isoliermaterial, das zwischen dem Innengehäuses (200) und dem Außengehäuse (11) angeordnet ist,
wobei das Innengehäuse (200) eine obere Platte (220), eine untere Platte (250), eine linke Platte (212), eine rechte Platte (211), eine hintere Platte (230) und eine vordere Abdeckung (240) umfasst; und
**dadurch gekennzeichnet, dass**
jede der linken Platte (212) und der rechten Platte (211) so vorgesehen ist, dass sie durch eine Platte mit einer anderen Dicke ersetzt werden kann;
jede der linken Platte (212) und der rechten Platte (211) eine Platte aus einer ersten Platte (260) mit einer ersten Dicke und einer zweiten Platte (270) mit einer zweiten Dicke, die größer als die erste Dicke ist, enthält; und
die erste Platte (260) eine Kante (261) umfasst, die so gebogen ist, dass sie der zweiten Dicke entspricht,
wobei mindestens eine aus der oberen Platte (220), der unteren Platte (250), der hinteren Platte (230) und der vorderen Abdeckung (240) seitliche Platteneinführungsnuten (224, 234) umfasst, die an ihren linken und rechten Kanten ausgebildet sind, um zu ermöglichen, dass die linke Platte (212) und die rechte Platte (211) in die seitlichen Platteneinführungsnuten (224, 234) eingeführt wird.

2. Kühlschrank nach Anspruch 1, wobei:
aus einem ersten Element und einem zweiten Element, die zueinander benachbart sind, aus der oberen Platte (220), der unteren Platte (250), der hinteren Platte (230) und der vorderen Abdeckung (240), das erste Element einen Flansch (231) umfasst, der konfiguriert ist, um sich in Richtung des zweiten Elements zu erstrecken; und
das zweite Element eine Flanscheinführungsnut (221) umfasst, die an einer Kante des zweiten Elements ausgebildet ist, die sich an einer Seite des ersten Elements befindet und konfiguriert ist, um zu ermöglichen, dass der Flansch (231) des ersten Elements in die Flanscheinführungsnut (221) eingeführt wird.

3. Kühlschrank nach Anspruch 2, wobei:
das erste Element einen Haken (232) umfasst, der so konfiguriert ist, dass er von einer Fläche des Flansches (231) vorsteht und so ausgebildet ist, dass er um einen vorbestimmten Abstand von einem Endabschnitt des Flansches (231) beabstandet ist; und
das zweite Element einen Schlitz (222) umfasst, der in der Flanscheinführungsnut (221) ausgebildet und zum Aufnehmen des Hakens (232) konfiguriert ist.

4. Kühlschrank nach Anspruch 1, wobei:
aus einem ersten Element und einem zweiten Element, die zueinander benachbart sind, aus der oberen Platte (220), der unteren Platte (250), der hinteren Platte (230) und der vorderen Abdeckung (240), das erste Element einen Vorsprung (225) umfasst, der an einem Endabschnitt einer seitlichen Platteneinführungsnut (224) des ersten Elements ausgebildet ist, die sich an einer Seite des zweiten Elements befindet und konfiguriert ist, um sich in Richtung des zweiten Elements zu erstrecken; und
das zweite Element eine Vorsprungeinführungsnut (235) umfasst, die an einem Endabschnitt einer seitlichen Platteneinführungsnut (234) des zweiten Elements ausgebildet ist, die sich an einer Seite des ersten Elements befindet und konfiguriert ist, um zu ermöglichen, dass der Vorsprung (225) des ersten Elements in die Vorsprungseinführungsnut (235) eingeführt wird.

5. Kühlschrank nach Anspruch 4, wobei der Vorsprung (225) des ersten Elements und die Vorsprungseinführungsnut (235) des zweiten Elements durch ein Kopplungselement (237) gekoppelt sind.

6. Kühlschrank nach Anspruch 5, wobei die linke Platte (212) und die rechte Platte (211) an ihren Ecken ausgebildete Ausweichabschnitte (262, 272) derart umfassen, dass das Kopplungselement (237) nicht durch die linke Platte (212) und die rechte Platte (211) hindurchgeht.

7. Kühlschrank nach Anspruch 1, wobei:
die hintere Platte (230) eine erste hintere Platte (280) und eine zweite hintere Platte (290) umfasst, die vertikal angeordnet sind;
die erste hintere Platte (280) einen Flansch (281) umfasst, der an einer Kante der ersten hinteren Platte (280) ausgebildet ist, die sich an einer Seite der zweiten hinteren Platte (290) befindet; und die zweite hintere Platte (290) eine an einer Kante der zweiten hinteren Platte (290) ausgebildete Flanscheinführungsnut (291) umfasst, die sich an einer Seite der ersten hinteren Platte (280) befindet, um zu ermöglichen, dass der Flansch (281) der ersten hinteren Platte (280) in die Flanscheinführungsnut (291) eingeführt wird.

8. Kühlschrank nach Anspruch 7, wobei die erste hintere Platte (280) einen unebenen Abschnitt (283) umfasst, der an einer Fläche des Flansches (281) ausgebildet ist, um ein Auslaufen des Isoliermaterials zu verhindern.

9. Kühlschrank nach Anspruch 7, wobei die hintere Platte (230) ein Trägerelement (239) umfasst, das an einer Rückseite der hinteren Platte (230) befestigt ist und konfiguriert ist, um die erste hintere Platte (280) und die zweite hintere Platte (290) zu verbinden.

10. Kühlschrank nach Anspruch 9, wobei die hintere Platte (230) ein Regalinstallationselement (238) umfasst, das an einer Vorderfläche der hinteren Platte (230) befestigt und an dem Trägerelement (239) fixiert ist, damit ein Regal (25) in dem Lagerfach (20) installiert werden kann.

11. Kühlschrank nach Anspruch 1, wobei:
die hintere Platte (230) ein Harzmaterial umfasst;
die erste Platte (260) ein Metallmaterial umfasst; und
die zweite Platte (270) ein Keramikmaterial umfasst.

12. Kühlschrank nach Anspruch 11, wobei die zweite Platte (270) eine Körperschicht (273) mit einem Keramikmaterial, eine auf der Körperschicht (273) ausgebildete beschichtete Schicht (274), die sich an einer Seite des Lagerfachs (20) befindet, und eine auf der Körperschicht (273) ausgebildete Verstärkungsschicht (275, 276), die sich an einer Seite des Außengehäuses (11) befindet, umfasst.

13. Kühlschrank nach Anspruch 12, wobei die Verstärkungsschicht mindestens eine Schicht aus einer ersten Verstärkungsschicht (275) mit einem Metallmaterial und einer zweiten Verstärkungsschicht (276) mit einem Fasermaterial umfasst.

## Revendications

1. Réfrigérateur (1), comprenant :
un boîtier intérieur (200) configuré pour former un compartiment de stockage (20) ;
un boîtier extérieur (11) couplé à un côté extérieur du boîtier intérieur (200) et configuré pour former un extérieur ; et
un matériau isolateur interposé entre le boîtier intérieur (200) et le boîtier extérieur (11),
dans lequel le boîtier intérieur (200) comprend une plaque supérieure (220), une plaque inférieure (250), une plaque gauche (212), une plaque droite (211), une plaque arrière (230) et un couvercle avant (240) ; et
**caractérisé en ce que**
chacune de la plaque gauche (212) et de la plaque droite (211) est prévue pour être remplacée par une plaque ayant une épaisseur différente ;
chacune de la plaque gauche (212) et de la plaque droite (211) comprend une plaque d'une première plaque (260) ayant une première épaisseur et d'une deuxième plaque (270) ayant une deuxième épaisseur supérieure à la première épaisseur ; et
la première plaque (260) comprend un bord (261) plié pour correspondre à la deuxième épaisseur, dans lequel au moins une de la plaque supérieure (220), de la plaque inférieure (250), de la plaque arrière (230) et du couvercle avant (240) comprend des rainures d'insertion de plaque latérales (224, 234) formées au niveau de leurs bords gauche et droit pour permettre l'insertion de la plaque gauche (212) et de la plaque droite (211) dans les rainures d'insertion de plaque latérales.

2. Réfrigérateur de la revendication 1, dans lequel :
parmi un premier élément et un deuxième élément, qui sont adjacents l'un à l'autre, parmi la plaque supérieure (220), la plaque inférieure (250), la plaque arrière (230), et le couvercle avant (240), le premier élément comprend une bride (231) configurée pour s'étendre vers le deuxième élément ; et
le deuxième élément comprend une rainure d'insertion de bride (221) formée sur un bord du deuxième élément situé sur un côté latéral du premier élément et configurée pour permettre à la bride (231) du premier élément d'être insérée dans la rainure d'insertion de bride (221).

3. Réfrigérateur de la revendication 2, dans lequel :
le premier élément comprend un crochet (232) configuré pour faire saillie à partir d'une surface de la bride (231) et formé pour être espacé d'une distance prédéterminée d'une partie d'extrémité de la bride (231) ; et
le deuxième élément comprend un créneau (222) formé dans la rainure d'insertion de bride (221) et configuré pour accueillir le crochet (232).

4. Réfrigérateur de la revendication 1, dans lequel :
parmi un premier élément et un deuxième élément, qui sont adjacents l'un à l'autre, parmi la plaque supérieure (220), la plaque inférieure (250), la plaque arrière (230), et le couvercle avant (240), le premier élément comprend une saillie (225) formée à une partie d'extrémité d'une rainure d'insertion de plaque latérale (224) du premier élément situé sur un côté du deuxième élément et configuré pour s'étendre vers le deuxième élément ; et
le deuxième élément comprend une rainure d'insertion de saillie (235) formée à une partie d'extrémité d'une rainure d'insertion de plaque latérale (234) du deuxième élément située sur un côté du premier élément et configurée pour permettre à la saillie (225) du premier élément d'être insérée dans la rainure d'insertion de saillie (235).

5. Réfrigérateur de la revendication 4, dans lequel la saillie (225) du premier élément et la rainure d'insertion de saillie (235) du deuxième élément sont couplées par un élément de couplage (237).

6. Réfrigérateur de la revendication 5, dans lequel la plaque gauche (212) et la plaque droite (211) comprennent des parties d'évasion (262, 272) formées à leurs coins de sorte que l'élément de couplage (237) ne traverse pas la plaque gauche (212) et la plaque droite (211).

7. Réfrigérateur de la revendication 1, dans lequel :
la plaque arrière (230) comprend une première plaque arrière (280) et une deuxième plaque arrière (290) disposées verticalement ;
la première plaque arrière (280) comprend une bride (281) formée sur un bord de la première plaque arrière (280) situé sur un côté de la deuxième plaque arrière (290) ; et
la deuxième plaque arrière (290) comprend une rainure d'insertion de bride (291) formée sur un bord de la deuxième plaque arrière (290) situé sur un côté de la première plaque arrière (280) pour permettre à la bride (281) de la première plaque arrière (280) d'être insérée dans la rainure d'insertion de bride (291).

8. Réfrigérateur de la revendication 7, dans lequel la première plaque arrière (280) comprend une partie inégale (283) formée au niveau d'une surface de la bride (281) pour empêcher la fuite du matériau isolateur.

9. Réfrigérateur de la revendication 7, dans lequel la plaque arrière (230) comprend un élément de support (239) fixé à une surface arrière de la plaque arrière (230) et configuré pour relier la première plaque arrière (280) et la deuxième plaque arrière (290).

10. Réfrigérateur de la revendication 9, dans lequel la plaque arrière (230) comprend un élément d'installation d'étagère (238) attaché à une surface avant de la plaque arrière (230) et fixé à l'élément de support (239) pour permettre à une étagère (25) d'être installée dans le compartiment de stockage (20).

11. Réfrigérateur de la revendication 1, dans lequel :
la plaque arrière (230) comprend un matériau en résine ;
la première plaque (260) comprend un matériau métallique ; et
la deuxième plaque (270) comprend un matériau céramique.

12. Réfrigérateur de la revendication 11, dans lequel la deuxième plaque (270) comprend une couche de corps (273) ayant un matériau céramique, une couche revêtue (274) formée sur la couche de corps (273) située sur un côté du compartiment de stockage (20), et une couche de renforcement (275, 276) formée sur la couche de corps (273) située sur un côté du boîtier extérieur (11).

13. Réfrigérateur de la revendication 12, dans lequel la couche de renforcement comprend au moins une couche d'une première couche de renforcement ayant (275) un matériau métallique et une deuxième couche de renforcement (276) ayant un matériau fibreux.
